# FASCICULE DE BREVET EUROPEEN

(11) **EP 4 371 885 B1**
(45) Date de publication et mention de la délivrance du brevet: **20.08.2025**
(21) Numéro de dépôt: 23209317.9
(22) Date de dépôt: 13.11.2023
(51) Int. Cl.: B64D 33/08, B64D 37/30, B64D 37/32, F02C 7/14, F02C 7/224, F02C 3/22, F02C 7/22, H01M 8/04082, F17C 9/00

(54) **AÉRONEF COMPORTANT UN SYSTÈME D'ALIMENTATION EN DIHYDROGÈNE**
FLUGZEUG MIT EINEM WASSERSTOFFVERSORGUNGSSYSTEM
AIRCRAFT COMPRISING A SYSTEM FOR SUPPLYING HYDROGEN

(30) Priorité: 15.11.2022 FR 2211878
(43) Date de publication de la demande: 22.05.2024
(73) Titulaire: AIRBUS OPERATIONS, 31060 Toulouse Cedex 9 (FR)
(72) Inventeur: MILLIERE, Jérôme, 31060 TOULOUSE (FR)
(74) Mandataire: Cabinet Le Guen Maillet

(56) Documents cités:
- WO-A1-2022/234176
- US-A1- 2019 331 298
- US-A1- 2022 146 047
- US-A1- 2022 307 428

## Description

### DOMAINE TECHNIQUE

La présente invention concerne un aéronef comportant un système d'alimentation en dihydrogène qui présente une sécurité améliorée. La présente invention concerne également un procédé de purge mis en œuvre avec un tel système d'alimentation.

### ÉTAT DE LA TECHNIQUE ANTÉRIEURE

Afin de réduire la pollution engendrée par l'utilisation de kérosène lors de l'utilisation d'un aéronef, il se développe des aéronefs dont les moteurs sont alimentés en dihydrogène que ce soit pour alimenter une pile à combustible afin de générer un courant électrique qui va à son tour faire tourner le moteur de l'aéronef ou pour alimenter directement la chambre à combustion d'un moteur thermique de l'aéronef.

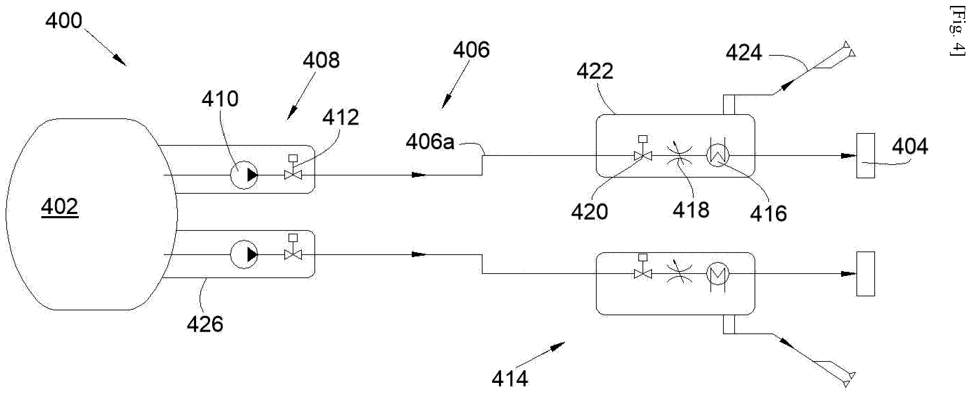

La Fig. 4 montre un système d'alimentation 400 de l'état de la technique qui comporte un réservoir de dihydrogène 402 et au moins un dispositif destinataire 404 qui est prévu pour consommer le dihydrogène qu'il reçoit et qui peut être par exemple une pile à combustible ou un moteur thermique.

Le système d'alimentation 400 comporte également, pour chaque dispositif destinataire 404, une canalisation d'apport 406 qui s'étend entre le réservoir de dihydrogène 402 et le dispositif destinataire 404. La canalisation d'apport 406 est classiquement une canalisation à double peau.

En amont du dispositif destinataire 404 et pour chaque canalisation d'apport 406, il est prévu un système de chauffe 414 qui comporte un échangeur thermique 416 monté sur la canalisation d'apport 406 en amont du dispositif destinataire 404, et une électrovanne de régulation de débit 418 qui est ici ajustable et qui montée sur la canalisation d'apport 406 en amont de l'échangeur thermique 416.

Le système d'alimentation 400 comporte une première électrovanne d'arrêt 420 et qui est montée sur la canalisation d'apport 406 en amont de l'électrovanne de régulation de débit 418.

Lorsque le dihydrogène arrive au niveau du système de chauffe 414, il est réchauffé avant d'atteindre le dispositif destinataire 404.

En aval du réservoir 402 et pour chaque canalisation d'apport 406, il est prévu un système d'entraînement 408 qui comporte une pompe 410 montée sur la canalisation d'apport 406 en aval du réservoir 402.

Le système d'alimentation 400 comporte une deuxième électrovanne d'arrêt 412 qui est montée sur la canalisation d'apport 406 en aval de la pompe 410. Le dihydrogène est ainsi capté dans le réservoir 402 et entraîné vers le dispositif destinataire 404 par le système d'entraînement 408.

Pour confiner le dihydrogène en cas de fuite au niveau des différents composants du système de chauffe 414, le système d'alimentation 400 comporte, pour chaque canalisation d'apport 406, une première enceinte 422 qui est traversée de la manière étanche par la canalisation d'apport 406 et dans laquelle sont installés l'échangeur thermique 416, l'électrovanne de régulation de débit 418 et la première électrovanne d'arrêt 420. Ainsi, en cas de fuite au niveau du système de chauffe 414, le dihydrogène reste confiné et peut être évacué vers l'extérieur par tous systèmes d'évacuation appropriés, comme par exemple une conduite d'évacuation 424 qui débouche par une extrémité dans la première enceinte et par une deuxième extrémité à l'extérieur de l'aéronef.

Pour confiner le dihydrogène en cas de fuite au niveau des différents composants du système d'entraînement 408, le système d'alimentation 400 comporte, pour chaque canalisation d'apport 406, une deuxième enceinte 426 qui est traversée de la manière étanche par la canalisation d'apport 406 et dans laquelle sont installées la pompe 410 et la deuxième électrovanne d'arrêt 412. Ainsi, en cas de fuite au niveau du système d'entraînement 408, le dihydrogène reste confiné et peut être évacué vers l'extérieur par tous systèmes d'évacuation appropriés comme celui décrit pour la première enceinte 422.

Chaque canalisation d'apport 406 comporte une section libre 406a qui s'étend en dehors des enceintes 422 et 426, entre la première électrovanne d'arrêt 420 et la deuxième électrovanne d'arrêt 412 associées. Pour limiter les risques de fuites au niveau de la canalisation d'apport 406, celle-ci prend la forme d'une canalisation à double peau.

La sécurité d'un système d'alimentation 400 peut encore être améliorée en particulier au niveau de la section libre 406a de la canalisation d'apport 406 qui peut être relativement longue. Le document US2022/146047 A1 divulgue un aéronef comportant un système d'alimentation en dihydrogène de l'état de la technique.

### EXPOSE DE L'INVENTION

Un objet de la présente invention est de proposer un aéronef comportant un système d'alimentation en dihydrogène qui présente une sécurité améliorée en cas de fuite.

À cet effet, est proposé un aéronef comportant un système d'alimentation comportant :
- un réservoir de dihydrogène,
- au moins un dispositif destinataire prévu pour consommer le dihydrogène,
- pour chaque dispositif destinataire, une canalisation d'apport à double peau qui relie fluidiquement le réservoir de dihydrogène et le dispositif destinataire,
- pour chaque canalisation d'apport et en amont du dispositif destinataire, une première enceinte traversée de la manière étanche par la canalisation d'apport et dans laquelle sont installés sur la canalisation d'apport, des premiers moyens arrangés pour réchauffer le dihydrogène,
- pour chaque canalisation d'apport, une première électrovanne d'arrêt montée sur la canalisation d'apport en amont des premiers moyens et installée dans la première enceinte,
- pour chaque canalisation d'apport et en aval du réservoir, une deuxième enceinte traversée de la manière étanche par la canalisation d'apport et dans laquelle sont installés sur la canalisation d'apport, des deuxièmes moyens arrangés pour capter le dihydrogène dans le réservoir et l'entraîner vers le dispositif destinataire,
- pour chaque canalisation d'apport, une deuxième électrovanne d'arrêt montée sur la canalisation d'apport en aval des deuxièmes moyens et installée dans la deuxième enceinte, où une section libre de ladite canalisation d'apport s'étend en dehors de la première enceinte et de la deuxième enceinte, entre la première électrovanne d'arrêt et la deuxième électrovanne d'arrêt,
- pour chaque première enceinte, une conduite complémentaire d'évacuation, une canalisation de dérivation fluidiquement connectée entre la canalisation d'apport et la conduite complémentaire d'évacuation qui débouche à l'extérieur de l'aéronef, et une troisième électrovanne montée sur la canalisation de dérivation,
- au moins un réservoir de sécurité qui contient un fluide inerte sous pression,
- pour chaque section libre, une canalisation de purge fluidiquement connectée à la canalisation d'apport correspondante en aval de la deuxième électrovanne d'arrêt,
- un système de distribution fluidiquement connecté entre ledit au moins un réservoir de sécurité et chaque canalisation de purge, et comportant des moyens pour diriger le fluide inerte vers l'une ou l'autre des canalisations d'apport à partir de l'un ou l'autre des réservoirs de sécurité,
- pour chaque canalisation de purge, un clapet anti-retour monté sur ladite canalisation de purge pour autoriser le passage d'un fluide du système de distribution vers la canalisation d'apport et empêcher le passage d'un fluide de la canalisation d'apport vers le système de distribution,
- pour chaque section libre, au moins un capteur arrangé pour détecter une fuite de dihydrogène au niveau de ladite section libre,
- une unité de contrôle prévue pour recevoir de chaque capteur des informations relatives à la détection ou non d'une fuite, pour, lorsqu'aucune information relative à une fuite n'est reçue, commander la mise en marche des deuxièmes moyens, l'ouverture de chaque première électrovanne d'arrêt et de chaque deuxième électrovanne d'arrêt, la fermeture de chaque troisième électrovanne et le système de distribution pour que le fluide inerte ne s'écoule pas, et pour lorsqu'une information relative à une fuite dans une section libre est reçue, commander l'arrêt des deuxièmes moyens correspondant à la section libre, la fermeture de la première électrovanne d'arrêt et de la deuxième électrovanne d'arrêt correspondant à la section libre, l'ouverture de la troisième électrovanne et le système de distribution pour que le fluide inerte s'écoule vers la section libre.

Avec un tel système d'alimentation, le dihydrogène présent dans une section libre est évacué en cas de fuite.

Avantageusement, la canalisation de purge est fluidiquement connectée à la section libre. Avantageusement, la canalisation de dérivation est fluidiquement connectée à la section libre. Avantageusement, le système d'alimentation comporte pour chaque première enceinte, une conduite d'évacuation qui débouche par une extrémité dans la première enceinte et par une deuxième extrémité à l'extérieur et la conduite complémentaire d'évacuation associée est fluidiquement connectée à la conduite d'évacuation.

L'invention concerne également un procédé de purge mis en œuvre dans un aéronef selon l'une des variantes précédentes, où le procédé de purge comporte, à partir d'une situation où l'unité de contrôle commande la mise en marche des deuxièmes moyens, l'ouverture de chaque première électrovanne d'arrêt et de chaque deuxième électrovanne d'arrêt, la fermeture de chaque troisième électrovanne et le système de distribution pour que le fluide inerte ne s'écoule pas :
- une étape d'attente au cours de laquelle l'unité de contrôle attend une information d'au moins un des capteurs l'informant de la détection d'une fuite au niveau d'une section libre,
- en cas de non-réception d'une telle information, une étape de bouclage au cours de laquelle le processus boucle sur l'étape d'attente,
- en cas de réception d'une telle information, une étape d'arrêt au cours de laquelle l'unité de contrôle commande l'arrêt des deuxièmes moyens correspondant à la section libre où une fuite a été détectée,
- une étape de fermeture au cours de laquelle l'unité de contrôle commande la fermeture de la première électrovanne d'arrêt et de la deuxième électrovanne d'arrêt correspondant à la section libre où une fuite a été détectée,
- une étape d'ouverture au cours de laquelle l'unité de contrôle commande l'ouverture de la troisième électrovanne correspondant à la section libre où une fuite a été détectée, et
- une étape de commande au cours de laquelle l'unité de contrôle commande le système de distribution de manière à canaliser le fluide inerte d'un réservoir de sécurité vers la section libre où une fuite a été détectée.

Selon un mode de réalisation particulier, le procédé de purge comporte entre l'étape d'arrêt et l'étape de commande :
- une première étape de fermeture au cours de laquelle l'unité de contrôle commande la fermeture de la deuxième électrovanne d'arrêt correspondant à la section libre où une fuite a été détectée,
- une étape d'ouverture au cours de laquelle l'unité de contrôle commande l'ouverture de la troisième électrovanne correspondant à la section libre où une fuite a été détectée, et
- une deuxième étape de fermeture au cours de laquelle l'unité de contrôle commande la fermeture de la première électrovanne d'arrêt correspondant à la section libre où une fuite a été détectée.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de dessus d'un aéronef selon l'invention,
[Fig. 2] est une représentation schématique d'un système d'alimentation en dihydrogène selon l'invention,
[Fig. 3] illustre schématiquement un organigramme mis en œuvre avec le système d'alimentation en dihydrogène selon l'invention, et
[Fig. 4] est une représentation schématique d'un système d'alimentation en dihydrogène de l'état de la technique, et
[Fig. 5] illustre schématiquement un exemple d'architecture matérielle d'une unité de contrôle mise en œuvre dans l'invention.

### EXPOSÉ DÉTAILLÉ DE MODES DE RÉALISATION

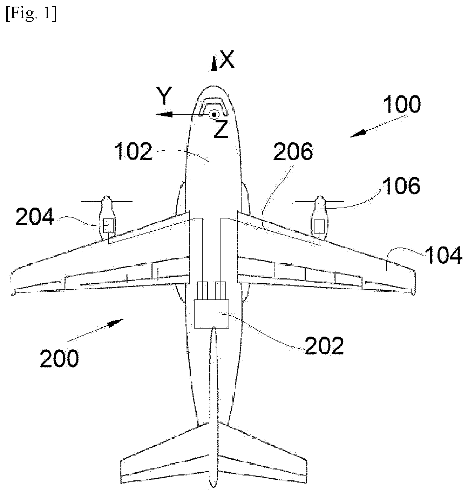

La Fig. 1 montre un aéronef 100 qui comporte un fuselage 102 de chaque côté duquel est fixée une aile 104 qui porte au moins un moteur 106, qui dans le mode de réalisation de l'invention présenté ici est un moteur à hélice.

L'aéronef 100 comporte également un système d'alimentation 200 selon l'invention qui comporte un réservoir de dihydrogène 202 et au moins un dispositif destinataire 204 qui est prévu pour consommer le dihydrogène qu'il reçoit. Dans le mode de réalisation de l'invention présenté à la Fig. 1, le dispositif destinataire 204 est une pile à combustible qui alimente en courant électrique le moteur à hélice, mais dans un autre mode de réalisation, le dispositif destinataire 204 peut être la chambre de combustion d'une turbomachine.

Pour chaque dispositif destinataire 204, le système d'alimentation 200 comporte une canalisation d'apport 206 qui relie fluidiquement le réservoir de dihydrogène 202 et le dispositif destinataire 204. Dans la suite de la description, les termes « amont » et « aval » sont relatifs au sens d'écoulement du dihydrogène dans la canalisation d'apport 206, c'est-à-dire du réservoir de dihydrogène 202 vers le dispositif destinataire 204.

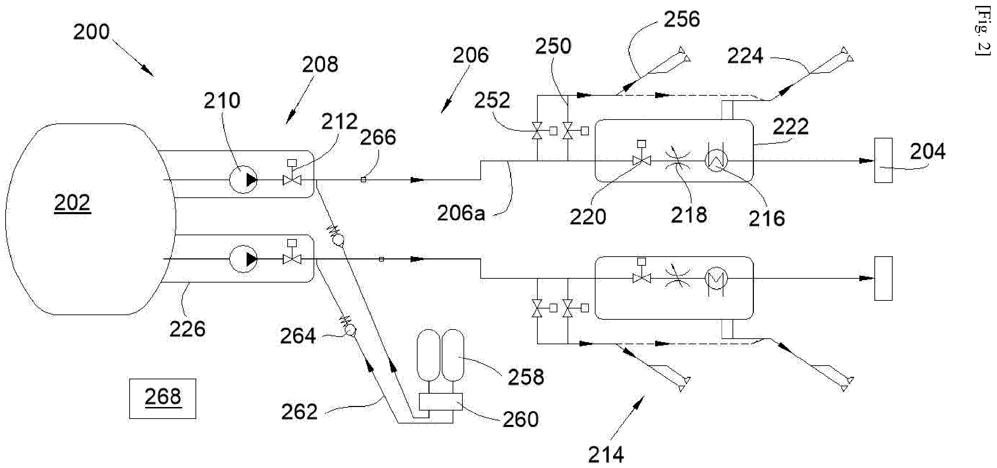

La Fig. 2 montre le système d'alimentation 200.

La canalisation d'apport 206 est une canalisation à double peau, c'est-à-dire qu'elle comporte une peau intérieure dans laquelle circule le dihydrogène et une peau extérieure fixée autour de la peau intérieure et qui est remplie d'un gaz inerte ou tirée au vide ou rempli d'un matériau thermiquement isolant.

En amont du dispositif destinataire 204 et pour chaque canalisation d'apport 206, il est prévu un système de chauffe 214 qui comporte des premiers moyens qui sont installés sur la canalisation d'apport 206 et arrangés pour réchauffer le dihydrogène avant de l'envoyer vers le dispositif destinataire 204.

Dans le mode de réalisation de l'invention présenté ici, les premiers moyens comportent un échangeur thermique 216 monté sur la canalisation d'apport 206 en amont du dispositif destinataire 204 et une électrovanne de régulation de débit 218 qui est ici ajustable et qui est montée sur la canalisation d'apport 206 en amont de l'échangeur thermique 216.

Le système d'alimentation 200 comporte une première électrovanne d'arrêt 220 qui est montée sur la canalisation d'apport 206 en amont des premiers moyens et ici en amont de l'électrovanne de régulation de débit 218. La première électrovanne d'arrêt 220 commande l'entrée ou non du dihydrogène dans le système de chauffe 214 selon qu'elle est ouverte ou fermée.

Lorsque le dihydrogène arrive au niveau du système de chauffe 214, il est réchauffé avant d'atteindre le dispositif destinataire 204.

L'échangeur thermique 216 assure un transfert de calories vers le dihydrogène à partir d'un fluide caloporteur qui circule dans ledit échangeur thermique 216.

En aval du réservoir 202 et pour chaque canalisation d'apport 206, il est prévu un système d'entraînement 208 qui comporte des deuxièmes moyens qui sont arrangés pour capter le dihydrogène dans le réservoir 202 et l'entraîner vers le dispositif destinataire 204 à travers la canalisation d'apport 206. Dans le mode de réalisation de l'invention présenté à la Fig. 2, les deuxièmes moyens comportent une pompe 210 montée sur la canalisation d'apport 206 en aval du réservoir 202.

Le système d'alimentation 200 comporte une deuxième électrovanne d'arrêt 212 qui est montée sur la canalisation d'apport 206 en aval des deuxièmes moyens et ici en aval de la pompe 210. La deuxième électrovanne d'arrêt 212 commande la sortie ou non du dihydrogène du système d'entraînement 208 selon qu'elle est ouverte ou fermée.

Pour confiner le dihydrogène en cas de fuite au niveau des différents composants du système de chauffe 214, le système d'alimentation 200 comporte, pour chaque canalisation d'apport 206, une première enceinte 222 qui est traversée de la manière étanche par la canalisation d'apport 206 et dans laquelle sont installés les premiers moyens et la première électrovanne d'arrêt 220. Ainsi, en cas de fuite au niveau du système de chauffe 214 ou de la première électrovanne d'arrêt 220, le dihydrogène reste confiné et peut être évacué vers l'extérieur par tous systèmes d'évacuation appropriés, comme par exemple une conduite d'évacuation 224 qui débouche par une extrémité dans la première enceinte 222 et par une deuxième extrémité à l'extérieur de l'aéronef 100.

Pour confiner le dihydrogène en cas de fuite au niveau des différents composants du système d'entraînement 208, le système d'alimentation 200 comporte, pour chaque canalisation d'apport 206, une deuxième enceinte 226 qui est traversée de la manière étanche par la canalisation d'apport 206 et dans laquelle sont installés les deuxièmes moyens et la deuxième électrovanne d'arrêt 212. Ainsi, en cas de fuite au niveau du système d'entraînement 208 ou de la deuxième électrovanne d'arrêt 212, le dihydrogène reste confiné et peut être évacué vers l'extérieur par tous systèmes d'évacuation appropriés comme celui décrit pour la première enceinte 222.

Chaque canalisation d'apport 206 comporte une section libre 206a qui s'étend en dehors de la première enceinte 222 et de la deuxième enceinte 226, entre la première électrovanne d'arrêt 220 et la deuxième électrovanne d'arrêt 212 associée et le dihydrogène s'écoule de la deuxième électrovanne d'arrêt 212 vers la première électrovanne d'arrêt 220 qui est en aval par rapport à la deuxième électrovanne d'arrêt 212.

Pour chaque première enceinte 222, le système d'alimentation 200 comporte une canalisation de dérivation 250 qui est fluidiquement connectée, d'une part, à la canalisation d'apport 206 entre la première électrovanne d'arrêt 220 et la deuxième électrovanne d'arrêt 212 et, d'autre part à une conduite complémentaire d'évacuation 256 qui débouche par une extrémité dans la canalisation de dérivation 250 et par une deuxième extrémité à l'extérieur de l'aéronef 100. Selon un mode de réalisation particulier, la conduite complémentaire d'évacuation 256 relative à la canalisation de dérivation 250 et la conduite d'évacuation 224 relative à la première enceinte 222 sont fluidiquement connectées comme cela est représenté en traits pointillés. Un tel arrangement permet de limiter les ouvertures vers l'extérieur.

La canalisation de dérivation 250 est connectée à la canalisation d'apport 206 au plus près de la première électrovanne d'arrêt 220 et en amont de cette dernière pour limiter le volume qui ne serait pas purgé et permettre ainsi l'évacuation de la plus grande partie du dihydrogène contenu dans la section libre 206a comme cela est expliqué ci-dessous. La connexion de la canalisation de dérivation 250 à la canalisation d'apport 206 peut être réalisée à l'intérieur ou à l'extérieur de la première enceinte 222, c'est-à-dire dans ce cas au niveau de la section libre 206a.

Dans le mode de réalisation de l'invention présenté à la Fig. 2, pour des raisons de redondance, il y a deux canalisations de dérivation 250 qui se regroupent avant de rejoindre la conduite d'évacuation 256, 224.

Chaque canalisation de dérivation 250 est équipée d'une troisième électrovanne 252 qui autorise ou non le passage du dihydrogène dans ladite canalisation de dérivation 250.

Le système d'alimentation 200 comporte également au moins un réservoir de sécurité 258 qui contient un fluide inerte sous pression comme par exemple de l'hélium gazeux.

Il y a ici deux réservoirs de sécurité 258 pour des raisons de redondance et de quantité de fluide inerte nécessaire en cas d'incident.

Chaque réservoir de sécurité 258 est fluidiquement connecté à un système de distribution 260. Pour chaque section libre 206a, le système d'alimentation 200 comporte également une canalisation de purge 262 qui est fluidiquement connectée entre le système de distribution 260 et la canalisation d'apport 206 en aval de la deuxième électrovanne d'arrêt 212 associée.

Dans le mode de réalisation de l'invention présenté à la Fig. 2, chaque canalisation de purge 262 est connectée à la canalisation d'apport 206 au plus près de la deuxième électrovanne d'arrêt 212, pour permettre l'écoulement du fluide inerte dans la plus grande partie de la section libre 206a comme cela est expliqué ci-dessous. La connexion de la canalisation de purge 262 à la canalisation d'apport 206 peut être réalisée à l'intérieur ou à l'extérieur de la deuxième enceinte 226, c'est-à-dire dans ce cas au niveau de la section libre 206a Le système de distribution 260 comportent des moyens qui permettent selon le cas de diriger le fluide inerte vers l'une ou l'autre des canalisations d'apport 206, et selon le cas l'une ou l'autre des sections libres 206a, à partir de l'un ou l'autre des réservoirs de sécurité 258. Ces moyens sont par exemple un réseau de conduites, d'électrovannes et de distributeurs fluidiques arrangés pour pouvoir diriger le fluide inerte selon les besoins.

Chaque canalisation de purge 262 est équipée d'un clapet anti-retour 264 qui autorise le passage d'un fluide dans la canalisation de purge 262 du système de distribution 260 vers la canalisation d'apport 206 associée, et selon le cas la section libre 206a associée, et empêche le passage d'un fluide de la canalisation d'apport 206, et selon le cas la section libre 206a, vers le système de distribution 260.

Chaque section libre 206a est équipée d'au moins un capteur 266 arrangé pour détecter une fuite de dihydrogène au niveau de la section libre 206a que la fuite ait lieu au niveau de la peau intérieure ou au niveau de la peau extérieure. Chaque capteur 266 est par exemple un capteur logé entre les deux peaux et apte à détecter du dihydrogène ou une variation de pression.

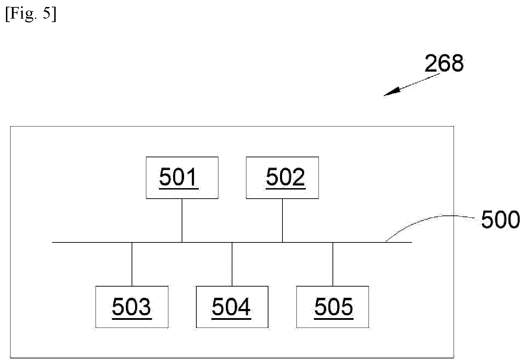

Le système d'alimentation 200 comporte également une unité de contrôle 268 dont un mode de réalisation est représenté à la Fig. 5.

L'unité de contrôle 268 est prévue pour recevoir de chaque capteur 266 des informations relatives à la détection ou non d'une fuite. Lorsqu'aucune information relative à une fuite n'est reçue, l'unité de contrôle 268 commande la mise en marche des deuxièmes moyens, l'ouverture de chaque première électrovanne d'arrêt 220 et de chaque deuxième électrovanne d'arrêt 212, la fermeture de chaque troisième électrovanne 252 et le système de distribution 260 pour que le fluide inerte ne s'écoule pas. Lorsqu'une information relative à une fuite dans une section libre 206a est reçue, l'unité de contrôle 268 commande l'arrêt des deuxièmes moyens correspondant à la section libre 206a où la fuite a été détectée, la fermeture de la première électrovanne d'arrêt 220 et de la deuxième électrovanne d'arrêt 212 correspondant à la section libre 206a où la fuite a été détectée, l'ouverture de la troisième électrovanne 252 correspondant à la section libre 206a où la fuite a été détectée et le système de distribution 260 pour que le fluide inerte s'écoule vers la section libre 206a où la fuite a été détectée. L'unité de contrôle 268 comprend, reliés par un bus de communication 500 : un processeur ou CPU (« Central Processing Unit » en anglais) 501 ; une mémoire vive RAM (« Random Access Memory » en anglais) 502 ; une mémoire morte ROM (« Read Only Memory » en anglais) 503, par exemple une mémoire Flash ; un dispositif de stockage de données, tel qu'un disque dur HDD (« Hard Disk Drive » en anglais), ou un lecteur de support de stockage d'informations ISM (« Information Storage Medium » en anglais) 504, tel qu'un lecteur de cartes SD (« Secure Digital » en anglais) ; au moins une interface de communication 505 permettant à l'unité de contrôle 268 de communiquer avec les capteurs 266, le système de distribution 260 et les différentes électrovannes.

Le processeur 501 est capable d'exécuter des instructions chargées dans la RAM 502 à partir de la ROM 503, d'une mémoire externe (non représentée), d'un support de stockage, tel qu'une carte SD, ou d'un réseau de communication (non représenté). Lorsque l'unité de contrôle 268 est mise sous tension, le processeur 501 est capable de lire de la RAM 502 des instructions et de les exécuter. Ces instructions forment un programme d'ordinateur causant l'implémentation, par le processeur 501, des comportements, étapes et algorithmes décrits ici. Tout ou partie de l'architecture modulaire, des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microprocesseur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). L'unité de contrôle 268 comporte donc de la circuiterie électronique agencée et configurée pour implémenter les comportements, étapes et algorithmes décrits ici.

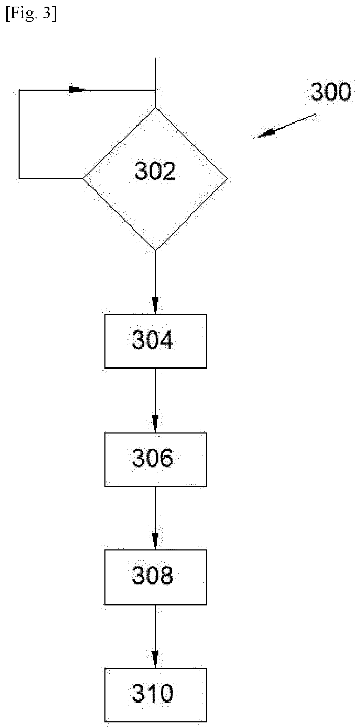

La Fig. 3 montre un organigramme d'un procédé de purge 300 mis en œuvre dans le cadre de l'utilisation du système d'alimentation 200 selon l'invention. Le procédé de purge 300 comporte, à partir d'une situation où l'unité de contrôle 268 commande la mise en marche des deuxièmes moyens, l'ouverture de chaque première électrovanne d'arrêt 220 et de chaque deuxième électrovanne d'arrêt 212, la fermeture de chaque troisième électrovanne 252 et le système de distribution 260 pour que le fluide inerte ne s'écoule pas :
- une étape d'attente 302 au cours de laquelle l'unité de contrôle 268 attend une information d'au moins un des capteurs 266 l'informant de la détection d'une fuite au niveau d'une section libre 106a,
- en cas de non-réception d'une telle information, une étape de bouclage au cours de laquelle le processus boucle sur l'étape d'attente 302,
- en cas de réception d'une telle information, une étape d'arrêt 304 au cours de laquelle l'unité de contrôle 268 commande l'arrêt des deuxièmes moyens, ici la pompe 210, correspondant à la section libre 106a où une fuite a été détectée, afin d'arrêter d'alimenter ladite section libre 106a en dihydrogène,
- une étape de fermeture 306 au cours de laquelle l'unité de contrôle 268 commande la fermeture de la première électrovanne d'arrêt 220 et de la deuxième électrovanne d'arrêt 212 correspondant à la section libre 106a où une fuite a été détectée, afin d'isoler ladite section libre 106a,
- une étape d'ouverture 308 au cours de laquelle l'unité de contrôle 268 commande l'ouverture de la troisième électrovanne 252 correspondant à la section libre 106a où une fuite a été détectée afin de canaliser le dihydrogène encore présent dans ladite section libre 106a vers l'extérieur, et
- une étape de commande 310 au cours de laquelle l'unité de contrôle 268 commande le système de distribution 260 de manière à canaliser le fluide inerte d'un réservoir de sécurité 258 vers la section libre 106a où une fuite a été détectée à travers la canalisation de purge 262 associée, afin de purger ladite section libre 106a du dihydrogène qu'elle contient vers l'extérieur.

Avec un tel procédé, le dihydrogène est purgé de la section libre 106a dès qu'une fuite y est détectée et il est remplacé par un fluide inerte.

Selon un mode de réalisation alternatif, le procédé comporte en remplacement de l'étape de fermeture 306 et de l'étape d'ouverture 308, c'est-à-dire entre l'étape d'arrêt 304 et l'étape de commande 310 :
- une première étape de fermeture au cours de laquelle l'unité de contrôle 268 commande la fermeture de la deuxième électrovanne d'arrêt 212 correspondant à la section libre 106a où une fuite a été détectée,
- une étape d'ouverture au cours de laquelle l'unité de contrôle 268 commande l'ouverture de la troisième électrovanne 252 correspondant à la section libre 106a où une fuite a été détectée, et
- une deuxième étape de fermeture au cours de laquelle l'unité de contrôle 268 commande la fermeture de la première électrovanne d'arrêt 220 correspondant à la section libre 106a où une fuite a été détectée.

Avec un tel procédé, la section libre 206a n'est pas entièrement isolée avant l'ouverture de la canalisation de dérivation 250, évitant ainsi les risques de surpression.

## Revendications

1. Aéronef (100) comportant un système d'alimentation (200) comportant :
- un réservoir de dihydrogène (202),
- au moins un dispositif destinataire (204) prévu pour consommer le dihydrogène,
- pour chaque dispositif destinataire (204), une canalisation d'apport (206) à double peau qui relie fluidiquement le réservoir de dihydrogène (202) et le dispositif destinataire (204),
- pour chaque canalisation d'apport (206) et en amont du dispositif destinataire (204), une première enceinte (222) traversée de la manière étanche par la canalisation d'apport (206) et dans laquelle sont installés sur la canalisation d'apport (206), des premiers moyens arrangés pour réchauffer le dihydrogène,
- pour chaque canalisation d'apport (206), une première électrovanne d'arrêt (220) montée sur la canalisation d'apport (206) en amont des premiers moyens et installée dans la première enceinte (222),
- pour chaque canalisation d'apport (206) et en aval du réservoir (202), une deuxième enceinte (226) traversée de la manière étanche par la canalisation d'apport (206) et dans laquelle sont installés sur la canalisation d'apport (206), des deuxièmes moyens arrangés pour capter le dihydrogène dans le réservoir (202) et l'entraîner vers le dispositif destinataire (204),
- pour chaque canalisation d'apport (206), une deuxième électrovanne d'arrêt (212) montée sur la canalisation d'apport (206) en aval des deuxièmes moyens et installée dans la deuxième enceinte (226), où une section libre (206a) de ladite canalisation d'apport (206) s'étend en dehors de la première enceinte (222) et de la deuxième enceinte (226), entre la première électrovanne d'arrêt (220) et la deuxième électrovanne d'arrêt (212),
- pour chaque première enceinte (222), une conduite complémentaire d'évacuation (256), une canalisation de dérivation (250) fluidiquement connectée entre la canalisation d'apport (206) et la conduite complémentaire d'évacuation (256) qui débouche à l'extérieur de l'aéronef (100), et une troisième électrovanne (252) montée sur la canalisation de dérivation (250),
- au moins un réservoir de sécurité (258) qui contient un fluide inerte sous pression,
- pour chaque section libre (206a), une canalisation de purge (262) fluidiquement connectée à la canalisation d'apport (206) correspondante en aval de la deuxième électrovanne d'arrêt (212),
- un système de distribution (260) fluidiquement connecté entre ledit au moins un réservoir de sécurité (258) et chaque canalisation de purge (262), et comportant des moyens pour diriger le fluide inerte vers l'une ou l'autre des canalisations d'apport (206) à partir de l'un ou l'autre des réservoirs de sécurité (258),
- pour chaque canalisation de purge (262), un clapet anti-retour (264) monté sur ladite canalisation de purge (262) pour autoriser le passage d'un fluide du système de distribution (260) vers la canalisation d'apport (206) et empêcher le passage d'un fluide de la canalisation d'apport (206) vers le système de distribution (260),
- pour chaque section libre (206a), au moins un capteur (266) arrangé pour détecter une fuite de dihydrogène au niveau de ladite section libre (206a),
- une unité de contrôle (268) prévue pour recevoir de chaque capteur (266) des informations relatives à la détection ou non d'une fuite, pour, lorsqu'aucune information relative à une fuite n'est reçue, commander la mise en marche des deuxièmes moyens, l'ouverture de chaque première électrovanne d'arrêt (220) et de chaque deuxième électrovanne d'arrêt (212), la fermeture de chaque troisième électrovanne (252) et le système de distribution (260) pour que le fluide inerte ne s'écoule pas, et pour lorsqu'une information relative à une fuite dans une section libre (206a) est reçue, commander l'arrêt des deuxièmes moyens correspondant à la section libre (206a), la fermeture de la première électrovanne d'arrêt (220) et de la deuxième électrovanne d'arrêt (212) correspondant à la section libre (206a), l'ouverture de la troisième électrovanne (252) et le système de distribution (260) pour que le fluide inerte s'écoule vers la section libre (206a).

2. Aéronef (100) selon la revendication 1, **caractérisé en ce que** la canalisation de purge (262) est fluidiquement connectée à la section libre (206a).

3. Aéronef (100) selon l'une des revendications 1 ou 2, **caractérisé en ce que** la canalisation de dérivation (250) est fluidiquement connectée à la section libre (206a).

4. Aéronef (100) selon l'une des revendications 1 à 3, **caractérisé en ce qu'**il comporte pour chaque première enceinte (222), une conduite d'évacuation (224) qui débouche par une extrémité dans la première enceinte (222) et par une deuxième extrémité à l'extérieur et **en ce que** la conduite complémentaire d'évacuation (256) associée est fluidiquement connectée à la conduite d'évacuation (224).

5. Procédé de purge (300) mis en œuvre dans un aéronef (100) selon l'une des revendications précédentes, où le procédé de purge (300) comporte, à partir d'une situation où l'unité de contrôle (268) commande la mise en marche des deuxièmes moyens, l'ouverture de chaque première électrovanne d'arrêt (220) et de chaque deuxième électrovanne d'arrêt (212), la fermeture de chaque troisième électrovanne (252) et le système de distribution (260) pour que le fluide inerte ne s'écoule pas :
- une étape d'attente (302) au cours de laquelle l'unité de contrôle (268) attend une information d'au moins un des capteurs (266) l'informant de la détection d'une fuite au niveau d'une section libre (106a),
- en cas de non-réception d'une telle information, une étape de bouclage au cours de laquelle le processus boucle sur l'étape d'attente (302),
- en cas de réception d'une telle information, une étape d'arrêt (304) au cours de laquelle l'unité de contrôle (268) commande l'arrêt des deuxièmes moyens correspondant à la section libre (106a) où une fuite a été détectée,
- une étape de fermeture (306) au cours de laquelle l'unité de contrôle (268) commande la fermeture de la première électrovanne d'arrêt (220) et de la deuxième électrovanne d'arrêt (212) correspondant à la section libre (106a) où une fuite a été détectée,
- une étape d'ouverture (308) au cours de laquelle l'unité de contrôle (268) commande l'ouverture de la troisième électrovanne (252) correspondant à la section libre (106a) où une fuite a été détectée, et
- une étape de commande (310) au cours de laquelle l'unité de contrôle (268) commande le système de distribution (260) de manière à canaliser le fluide inerte d'un réservoir de sécurité (258) vers la section libre (106a) où une fuite a été détectée.

6. Procédé de purge (300) selon la revendication 5, **caractérisé en ce qu'**il comporte entre l'étape d'arrêt (304) et l'étape de commande (310) :
- une première étape de fermeture au cours de laquelle l'unité de contrôle (268) commande la fermeture de la deuxième électrovanne d'arrêt (212) correspondant à la section libre (106a) où une fuite a été détectée,
- une étape d'ouverture au cours de laquelle l'unité de contrôle (268) commande l'ouverture de la troisième électrovanne (252) correspondant à la section libre (106a) où une fuite a été détectée, et
- une deuxième étape de fermeture au cours de laquelle l'unité de contrôle (268) commande la fermeture de la première électrovanne d'arrêt (220) correspondant à la section libre (106a) où une fuite a été détectée.

## Patentansprüche

1. Flugzeug (100), umfassend ein Versorgungssystem (200), umfassend:
- einen Wasserstofftank (202),
- mindestens eine Bestimmungsvorrichtung (204), die für den Verbrauch des Wasserstoffs vorgesehen ist,
- für jede Bestimmungsvorrichtung (204) einen doppelwandigen Zufuhrkanal (206), der den Wasserstofftank (202) und die Bestimmungsvorrichtung (204) fluidisch verbindet,
- für jeden Zufuhrkanal (206) und der Bestimmungsvorrichtung (204) vorgelagert ein erstes Gehäuse (222), das von dem Zufuhrkanal (206) dicht durchquert wird und in dem an dem Zufuhrkanal (206) erste Mittel zum Erwärmen des Wasserstoffs installiert sind,
- für jeden Zufuhrkanal (206) ein erstes Absperrmagnetventil (220), das an dem Zufuhrkanal (206) den ersten Mitteln vorgelagert angebracht und in dem ersten Gehäuse (222) installiert ist,
- für jeden Zufuhrkanal (206) und dem Tank (202) nachgelagert ein zweites Gehäuse (226), das von dem Zufuhrkanal (206) dicht durchquert wird und in dem an dem Zufuhrkanal (206) zweite Mittel installiert sind, die dazu eingerichtet sind, den Wasserstoff in dem Tank (202) aufzunehmen und zu der Bestimmungsvorrichtung (204) zu befördern,
- für jeden Zufuhrkanal (206) ein zweites Absperrmagnetventil (212), das an dem Zufuhrkanal (206) den zweiten Mitteln nachgelagert angebracht und in dem zweiten Gehäuse (226) installiert ist, wobei sich ein freier Abschnitt (206a) des Zufuhrkanals (206) außerhalb des ersten Gehäuses (222) und des zweiten Gehäuses (226) zwischen dem ersten Absperrmagnetventil (220) und dem zweiten Absperrmagnetventil (212) erstreckt,
- für jedes erste Gehäuse (222) eine zusätzliche Auslassleitung (256), ein zwischen dem Zufuhrkanal (206) und der zusätzlichen Auslassleitung (256) fluidisch verbundener Abzweigkanal (250), der außerhalb des Flugzeugs (100) mündet, und ein drittes Magnetventil (252), das an dem Abzweigkanal (250) angebracht ist,
- mindestens einen Sicherheitstank (258), der ein unter Druck stehendes inertes Fluid enthält,
- für jeden freien Abschnitt (206a) einen Entleerungskanal (262), der fluidisch mit dem entsprechenden Zufuhrkanal (206) verbunden ist, der dem zweiten Absperrmagnetventil (212) nachgelagert ist,
- ein Verteilungssystem (260), das fluidisch zwischen dem mindestens einen Sicherheitstank (258) und jedem Entleerungskanal (262) verbunden ist und Mittel umfasst, um das inerte Fluid aus dem einen oder anderen Sicherheitstank (258) zu dem einen oder anderen Zufuhrkanal (206) zu leiten,
- für jeden Entleerungskanal (262) ein Rückschlagventil (264), das an dem Entleerungskanal (262) angebracht ist, um den Durchfluss eines Fluids aus dem Verteilungssystem (260) zu dem Zufuhrkanal (206) zu ermöglichen und den Durchfluss eines Fluids aus dem Zufuhrkanal (206) zu dem Verteilungssystem (260) zu verhindern,
- für jeden freien Abschnitt (206a) mindestens einen Sensor (266), der so eingerichtet ist, dass er ein Austreten von Wasserstoff an dem freien Abschnitt (206a) erkennt,
eine Steuereinheit (268), die dazu vorgesehen ist, von jedem Sensor (266) Informationen über das Erkennen einer oder keiner Leckage zu empfangen, um, wenn keine Informationen über eine Leckage empfangen werden, das Einschalten der zweiten Mittel, das Öffnen jedes ersten Absperrmagnetventils (220) und jedes zweiten Absperrmagnetventils (212), das Schließen jedes dritten Magnetventils (252) und des Verteilungssystems (260) so zu befehlen, dass das inerte Fluid nicht strömt, und um, wenn eine Information über eine Leckage in einem freien Abschnitt (206a) empfangen wird, das Abschalten der dem freien Abschnitt (206a) entsprechenden zweiten Mittel, das Schließen des ersten Absperrmagnetventils (220) und des zweiten Absperrmagnetventils (212), die dem freien Abschnitt (206a) entsprechen, das Öffnen des dritten Magnetventils (252) und des Verteilungssystems (260) so zu befehlen, dass das inerte Fluid in den freien Abschnitt (206a) strömen kann.

2. Flugzeug (100) nach Anspruch 1, **dadurch gekennzeichnet, dass** der Entleerungskanal (262) fluidisch mit dem freien Abschnitt (206a) verbunden ist.

3. Flugzeug (100) nach einem der Ansprüche 1 oder 2, **dadurch gekennzeichnet, dass** der Abzweigkanal (250) fluidisch mit dem freien Abschnitt (206a) verbunden ist.

4. Flugzeug (100) nach einem der Ansprüche 1 bis 3, **dadurch gekennzeichnet, dass** es für jedes erste Gehäuse (222) eine Auslassleitung (224) umfasst, die mit einem Ende in das erste Gehäuse (222) und mit einem zweiten Ende nach außen mündet, und dass die zugehörige zusätzliche Auslassleitung (256) fluidisch mit der Auslassleitung (224) verbunden ist.

5. Entleerungsverfahren (300), das in einem Flugzeug (100) implementiert wird, nach einem der vorhergehenden Ansprüche, wobei das Entleerungsverfahren (300) ausgehend von einer Situation, in der die Steuereinheit (268) die Inbetriebnahme der zweiten Mittel befiehlt, das Öffnen jedes ersten Absperrmagnetventils (220) und jedes zweiten Absperrmagnetventils (212), das Schließen jedes dritten Magnetventils (252) und des Verteilungssystems (260) umfasst, damit das inerte Fluid nicht strömt:
- einen Schritt des Wartens (302), währenddessen die Steuereinheit (268) auf eine Information von mindestens einem der Sensoren (266) wartet, die ihr die Erkennung einer Leckage an einem freien Abschnitt (106a) meldet,
- bei Nichtempfang einer solchen Information ein Schleifenschritt, währenddessen der Prozess mit dem Warteschritt (302) abschließt,
- bei Empfang einer solchen Information ein Abschaltschritt (304), währenddessen die Steuereinheit (268) das Abschalten der zweiten Mittel entsprechend dem freien Abschnitt (106a), in dem eine Leckage erkannt wurde, befiehlt,
- einen Schließschritt (306), währenddessen die Steuereinheit (268) das Schließen des ersten Absperrmagnetventils (220) und des zweiten Absperrmagnetventils (212) entsprechend dem freien Abschnitt (106a), in dem eine Leckage erkannt wurde, befiehlt,
- einen Öffnungsschritt (308), währenddessen die Steuereinheit (268) das Öffnen des dritten Magnetventils (252) entsprechend dem freien Abschnitt (106a), in dem eine Leckage erkannt wurde, befiehlt, und
- einen Befehlsschritt (310), währenddessen die Steuereinheit (268) so Befehle an das Verteilungssystem (260) ausgibt, dass das inerte Fluid aus einem Sicherheitstank (258) zu dem freien Abschnitt (106a) kanalisiert wird, in dem eine Leckage erkannt wurde.

6. Entleerungsverfahren (300) nach Anspruch 5, **dadurch gekennzeichnet, dass** es zwischen dem Abschaltschritt (304) und dem Befehlsschritt (310) umfasst:
- einen ersten Schließschritt, währenddessen die Steuereinheit (268) das Schließen des zweiten Absperrmagnetventils (212) befiehlt, das dem freien Abschnitt (106a) entspricht, in dem eine Leckage erkannt wurde,
- einen Öffnungsschritt, währenddessen die Steuereinheit (268) das Öffnen des dritten Magnetventils (252) entsprechend dem freien Abschnitt (106a), in dem eine Leckage erkannt wurde, befiehlt, und
- einen zweiten Schließschritt, währenddessen die Steuereinheit (268) das Schließen des ersten Absperrmagnetventils (220) befiehlt, das dem freien Abschnitt (106a) entspricht, in dem eine Leckage erkannt wurde.

## Claims

1. Aircraft (100) comprising a supply system (200), comprising:
- a hydrogen gas tank (202),
- at least one recipient device (204) designed to consume hydrogen gas,
- for each recipient device (204), a double-walled feed line (206) which fluidly connects the hydrogen gas tank (202) and the recipient device (204),
- for each feed line (206) and upstream of the recipient device (204), a first enclosure (222), through which the feed line (206) passes in a sealed manner, and in which first means, arranged to heat the hydrogen gas, are installed on the feed line (206),
- for each feed line (206), a first solenoid shut off valve (220) mounted on the feed line (206) upstream of the first means and installed in the first enclosure (222),
- for each feed line (206) and downstream of the tank (202), a second enclosure (226), through which the feed line (206) passes in a sealed manner, and in which second means, arranged to capture the hydrogen gas in the tank (202) and drive it towards the recipient device (204), are installed on the feed line (206),
- for each feed line (206), a second solenoid shut off valve (212), mounted on the feed line (206) downstream of the second means and installed in the second enclosure (226), where a free section (206a) of said feed line (206) extends outside the first enclosure (222) and the second enclosure (226), between the first solenoid shut off valve (220) and the second solenoid shut off valve (212),
- for each first enclosure (222), a supplementary evacuation pipe (256), a branch line (250) fluidly connected between the feed line (206) and the supplementary evacuation pipe (256) which opens to the outside of the aircraft (100), and a third solenoid valve (252) mounted on the branch line (250),
- at least one safety tank (258) containing a pressurized inert fluid,
- for each free section (206a), a purge line (262) fluidly connected to the corresponding feed line (206) downstream of the second solenoid shut off valve (212),
- a distribution system (260) fluidly connected between said at least one safety tank (258) and each purge line (262), and comprising means for directing the inert fluid towards one or other of the feed lines (206) from one or other of the safety tanks (258),
- for each purge line (262), a non-return valve (264) mounted on said purge line (262), to allow the passage of a fluid from the distribution system (260) towards the feed line (206) and to prevent the passage of a fluid from the feed line (206) towards the distribution system (260),
- for each free section (206a), at least one sensor (266) arranged to detect a leak of hydrogen gas in said free section (206a),
- a control unit (268) designed to receive information from each sensor (266) relating to the detection or non-detection of a leak, so that, when no information relating to a leak is received, it causes the activation of the second means, the opening of each first solenoid shut off valve (220) and each second solenoid shut off valve (212), and the closure of each third solenoid valve (252) and the distribution system (260) so that the inert fluid does not flow, and so that, when information relating to a leak in a free section (206a) is received, it causes the stopping of the second means corresponding to the free section (206a), the closure of the first solenoid shut off valve (220) and of the second solenoid shut off valve (212) corresponding to the free section (206a), and the opening of the third solenoid valve (252) and the distribution system (260), so that the inert fluid flows towards the free section (206a).

2. Aircraft (100) according to Claim 1, **characterized in that** the purge line (262) is fluidly connected to the free section (206a).

3. Aircraft (100) according to any of Claims 1 and 2, **characterized in that** the branch line (250) is fluidly connected to the free section (206a).

4. Aircraft (100) according to any of Claims 1 to 3, **characterized in that** it comprises, for each first enclosure (222), an evacuation pipe (224) which has one end opening into the first enclosure (222) and a second end opening to the outside, and **in that** the associated supplementary evacuation pipe (256) is fluidly connected to the evacuation pipe (224).

5. Purge method (300) implemented in an aircraft (100) according to any of the preceding claims, wherein the purge method (300) comprises, starting from a situation in which the control unit (268) causes the activation of the second means, the opening of each first solenoid shut off valve (220) and each second solenoid shut off valve (212), and the closure of each third solenoid valve (252) and the distribution system (260) so that the inert fluid does not flow:
- a waiting step (302), in which the control unit (268) waits for information from at least one of the sensors (266) informing it of the detection of a leak in a free section (106a),
- if such information is not received, a looping step in which the process loops back to the waiting step (302),
- if such information is received, a stopping step (304) in which the control unit (268) causes the stopping of the second means corresponding to the free section (106a) where a leak has been detected,
- a closing step (306) in which the control unit (268) causes the closure of the first solenoid shut off valve (220) and the second solenoid shut off valve (212) corresponding to the free section (106a) where a leak has been detected,
- an opening step (308) in which the control unit (268) causes the opening of the third solenoid valve (252) corresponding to the free section (106a) where a leak has been detected, and
- a command step (310) in which the control unit (268) commands the distribution system (260) so as to feed the inert fluid from a safety tank (258) towards the free section (106a) where a leak has been detected.

6. Purge method (300) according to Claim 5, **characterized in that** it comprises, between the stopping step (304) and the command step (310):
- a first closing step in which the control unit (268) causes the closure of the second solenoid shut off valve (212) corresponding to the free section (106a) where a leak has been detected,
- an opening step in which the control unit (268) causes the opening of the third solenoid valve (252) corresponding to the free section (106a) where a leak has been detected, and
- a second closing step in which the control unit (268) causes the closure of the first solenoid shut off valve (220) corresponding to the free section (106a) where a leak has been detected.
